# DEMANDE DE BREVET EUROPEEN

(11) **EP 3 840 308 A1**
(43) Date de publication de la demande: **23.06.2021**
(21) Numéro de dépôt: 20214861.5
(22) Date de dépôt: 17.12.2020
(51) Int. Cl.: H04L 12/725, H04L 12/721, H04L 12/803

(54) **TRANSFERT DE FLUX DE DONNÉES VIA UNE PASSERELLE DE COMMUNICATION**

(30) Priorité: 19.12.2019 FR 1914915
(71) Demandeur: Softathome, 92700 Colombes (FR)
(72) Inventeur: IACOB, Mircea, 1080 Sint-Jans-Molenbeek (BE); MAKOWSKI, Wojciech, 78100 Saint-Germain-en-Laye (FR)
(74) Mandataire: Cabinet Beau de Loménie

(57) **Abrégé**

L'invention concerne un procédé de communication mis en œuvre par une première passerelle de communication (GTW1) faisant l'interface entre un réseau local (R1) et un réseau de communication (NT1), comprenant : détermination d'un niveau de qualité de connexion requis pour réaliser un transfert d'un flux de données avec le réseau de communication (NT1) ; détection qu'une première connexion, satisfaisant ledit niveau de qualité de connexion requis, ne peut être établie entre la première passerelle et le réseau de communication (NT1) ; envoi d'une requête d'accès à une deuxième passerelle de communication (GTW2) pour établir une deuxième connexion sans fil entre la première passerelle de communication (GTW1) et la deuxième passerelle de communication (GTW2) ; et transfert via la deuxième connexion sans fil, comportant la réception ou l'envoi d'au moins une première partie dudit flux de données depuis et/ou vers le réseau de communication (NT1).

## Description

### Domaine Technique

L'invention se rapporte au domaine des télécommunications et porte plus particulièrement sur l'échange de données entre une passerelle de communication et un réseau de communication distant.

### Technique antérieure

De façon connue, on peut aujourd'hui utiliser un routeur pour relier un réseau local à un réseau de communication distant tel qu'Internet par exemple. Un tel routeur, appelé plus généralement passerelle de communication, peut ainsi fournir à un quelconque terminal (ordinateur, téléphone portable, périphérique etc.) du réseau local un accès à Internet. La communication entre le terminal du réseau local et le routeur peut se faire via une connexion sans fil, de type Wifi par exemple. Un tel routeur peut par exemple servir de point d'accès en mode Wifi à un réseau local d'un ménage ou d'une entreprise.

La qualité de la connexion à Internet qui est offerte par le routeur à son réseau local est variable (selon notamment l'opérateur utilisé ou le trafic dans le réseau) et peut s'avérer insuffisante pour certaines utilisations. La connexion d'un routeur à Internet peut notamment être instable ou présenter une bande passante insuffisante, ce qui réduit l'expérience de l'utilisateur. Un niveau de qualité de connexion peut être requis pour permettre par exemple la mise œuvre dans de bonnes conditions d'un service hébergé sur Internet.

Plus généralement, la connexion entre une passerelle de communication d'un réseau local et un réseau distant ne permet pas toujours de réaliser un transfert de données dans de bonnes conditions.

Un but de l'invention est de remédier aux inconvénients ci-dessus.

### Exposé de l'invention

A cet effet, la présente invention concerne un premier procédé de communication mis en œuvre par une première passerelle de communication faisant l'interface entre un réseau local et un réseau de communication, comprenant les étapes suivantes :
- détermination d'un niveau de qualité de connexion requis pour réaliser un transfert d'un flux de données avec le réseau de communication ;
- détection qu'une première connexion, satisfaisant ledit niveau de qualité de connexion requis, ne peut être établie entre la première passerelle agissant en tant que point d'accès du réseau local et le réseau de communication ;
- en réponse à ladite détection, envoi d'une requête d'accès à une deuxième passerelle de communication pour établir une deuxième connexion sans fil entre la première passerelle de communication agissant en tant que client et la deuxième passerelle de communication agissant en tant que point d'accès au réseau de communication ; et
- transfert via ladite deuxième connexion sans fil, comportant la réception et/ou l'envoi d'au moins une première partie dudit flux de données depuis et/ou vers le réseau de communication.

Selon un exemple particulier, la deuxième passerelle de communication de communication fait l'interface entre un deuxième réseau local et le réseau de communication.

Selon un mode de réalisation particulier, le niveau de la qualité de connexion requis est défini par au moins l'un des paramètres de connexion suivants :
- un débit de transfert maximal ;
- un débit de transfert effectif ;
- une latence de transfert ; et
- un type de connexion.

Selon un mode de réalisation particulier, le premier procédé comprend les étapes suivantes :
- établissement d'une première connexion, ne satisfaisant pas ledit niveau de qualité de connexion requis, entre la première passerelle de communication agissant en tant que point d'accès du réseau local et le réseau de communication ; et
- transfert, via ladite première connexion, comportant la réception et/ou l'envoi d'au moins une deuxième partie dudit flux de données, autre que ladite première partie, depuis et/ou vers le réseau de communication.

Selon un mode de réalisation particulier, lors de l'étape de détection, la première passerelle de communication détecte qu'aucune première connexion entre la première passerelle agissant en tant que point d'accès du réseau local et le réseau de communication ne peut être établie.

Selon un mode de réalisation particulier, le premier procédé est tel que :
- lors de l'étape d'envoi, la première passerelle de communication envoie une dite requête d'accès à une pluralité de deuxièmes passerelles de communication pour établir une deuxième connexion entre la première passerelle de communication agissant en tant que client et chaque deuxième passerelle de communication agissant en tant que point d'accès au réseau de communication ; et
- lors de ladite étape de transfert, ladite au moins une première partie du flux de données est reçue et/ou envoyée via les deuxièmes connexions sans fil établies avec la pluralité de deuxièmes passerelles de communication.

Selon un mode de réalisation particulier, le premier procédé comprend les étapes suivantes :
- obtention des capacités d'accès au réseau de communication d'au moins une passerelle de communication prédéterminée ; et
- sélection, en fonction des capacités d'accès et dudit niveau de qualité de connexion requis, de ladite deuxième passerelle de communication parmi ladite au moins une passerelle de communication prédéterminée.

Selon un mode de réalisation particulier, la première passerelle de communication obtient un état de disponibilité de ladite au moins une passerelle de communication prédéterminée, l'état de disponibilité étant indicatif de la probabilité que ladite passerelle de communication soit disponible pour assurer le transit de ladite au moins une première partie du flux de données entre la première passerelle de communication et le réseau de communication.

Selon un mode de réalisation particulier, le premier procédé comprend les étapes suivantes :
- vérification des capacités d'accès de la deuxième passerelle de communication tandis que le transfert de ladite au moins une première partie du flux de données est en cours via la deuxième connexion sans fil ; et
- sur détection que les capacités d'accès de la deuxième passerelle de communication ne satisfont plus un niveau seuil prédéterminé :
   ∘ envoi d'une requête d'accès à une troisième passerelle de communication, autre que ladite deuxième passerelle de communication, pour établir une troisième connexion sans fil entre la première passerelle de communication agissant en tant que client et la troisième passerelle de communication agissant en tant que point d'accès au réseau de communication ; et
   ∘ basculement du transfert de tout ou partie de ladite au moins une première partie du flux de données avec le réseau de communication sur la troisième connexion sans fil.

Selon un mode de réalisation particulier, en réponse audit basculement, la première passerelle de communication, agissant en tant que client, réalise le transfert d'une partie du flux de données via la deuxième connexion sans fil simultanément au transfert via la troisième connexion sans fil.

Selon un mode de réalisation particulier, la deuxième connexion sans fil, et le cas échéant la troisième connexion sans fil, sont de type Wifi.

Dans un mode particulier de réalisation, les différentes étapes du premier procédé communication sont déterminées par des instructions de programmes d'ordinateurs.

En conséquence, l'invention vise aussi un programme d'ordinateur sur un support d'informations, ce programme étant susceptible d'être mis en œuvre dans un dispositif tel qu'une passerelle de communication, ou plus généralement dans un ordinateur, ce programme comportant des instructions adaptées à la mise en œuvre des étapes d'un premier procédé de communication tel que définis ci-dessus.

L'invention vise aussi un support d'enregistrement (ou support d'informations) lisible par un ordinateur, et comportant des instructions d'un programme d'ordinateur tel que mentionné ci-dessus.

L'invention concerne également un deuxième procédé de communication mis en œuvre par une première passerelle de communication faisant l'interface entre un réseau local et un réseau de communication, comprenant les étapes suivantes :
- envoi, à une deuxième passerelle de communication, des capacités d'accès de ladite première passerelle de communication à réseau de communication ;
- réception, provenant de la deuxième passerelle de communication, d'une requête d'accès pour établir une connexion sans fil entre la première passerelle de communication agissant en tant que point d'accès au réseau de communication et la deuxième passerelle de communication agissant en tant que client ; et
- transit via ladite connexion sans fil d'un flux de données entre la deuxième passerelle de communication et le réseau de communication.

Selon un exemple particulier, la deuxième passerelle de communication fait l'interface entre un deuxième réseau local et le réseau de communication.

Selon un mode de réalisation particulier, le deuxième procédé comprend une étape d'envoi d'un état de disponibilité de la première passerelle de communication, l'état de disponibilité étant indicatif de la probabilité que ladite première passerelle de communication soit disponible pour assurer ledit transit du flux de données.

Selon un mode de réalisation particulier, la connexion sans fil est de type Wifi.

Dans un mode particulier de réalisation, les différentes étapes du deuxième procédé communication sont déterminées par des instructions de programmes d'ordinateurs.

En conséquence, l'invention vise aussi un programme d'ordinateur sur un support d'informations, ce programme étant susceptible d'être mis en œuvre dans un dispositif tel qu'une passerelle de communication, ou plus généralement dans un ordinateur, ce programme comportant des instructions adaptées à la mise en œuvre des étapes d'un deuxième procédé de communication tel que définis ci-dessus.

L'invention vise aussi un support d'enregistrement (ou support d'informations) lisible par un ordinateur, et comportant des instructions d'un programme d'ordinateur tel que mentionné ci-dessus.

A noter que les programmes mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention vise aussi une première passerelle de communication faisant l'interface entre un réseau local et un réseau de communication, comprenant :
- un module de détermination configuré pour déterminer un niveau de qualité de connexion requis pour réaliser un transfert d'un flux de données avec le réseau de communication ;
- un module de détection configuré pour détecter qu'une première connexion, satisfaisant ledit niveau de qualité de connexion requis, ne peut être établie entre la première passerelle agissant en tant que point d'accès du réseau local et le réseau de communication ;
- un module d'envoi configuré, en réponse à ladite détection, pour envoyer une requête d'accès à une deuxième passerelle de communication pour établir une deuxième connexion sans fil entre la première passerelle de communication agissant en tant que client et la deuxième passerelle de communication agissant en tant que point d'accès au réseau de communication ; et
- un module de transfert configuré pour réaliser un transfert via ladite deuxième connexion sans fil, le transfert comportant la réception et/ou l'envoi d'au moins une première partie dudit flux de données depuis et/ou vers le réseau de communication.

Selon un exemple particulier, la deuxième passerelle de communication fait l'interface entre un deuxième réseau local et le réseau de communication.

L'invention vise en outre une première passerelle de communication faisant l'interface entre un réseau local et un réseau de communication, comprenant :
- un module d'envoi configuré pour envoyer, à une deuxième passerelle de communication, des capacités d'accès de ladite première passerelle de communication à réseau de communication ;
- un module de réception configuré pour recevoir, en provenance de la deuxième passerelle de communication, une requête d'accès pour établir une connexion sans fil entre la première passerelle de communication agissant en tant que point d'accès au réseau de communication et la deuxième passerelle de communication agissant en tant que client ; et
- un module de transit (MD24) configuré pour réaliser un transit via ladite connexion sans fil d'un flux de données entre la deuxième passerelle de communication et le réseau de communication.

Selon un exemple particulier, la deuxième passerelle de communication fait l'interface entre un deuxième réseau local et le réseau de communication.

A noter que les différents modes de réalisation définis ci-avant en relation avec les premier et deuxième procédés de communication s'appliquent par analogie aux passerelles de communication définies ci-dessus.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Pour chaque étape des premier et deuxième procédés de l'invention, les passerelles de communication de l'invention peuvent comprendre un module correspondant configuré pour réaliser ladite étape.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] la figure 1 représente schématiquement un environnement comprenant des passerelles de communication faisant l'interface entre des réseaux locaux respectifs et un réseau de communication distant, conformément à un mode de réalisation particulier de l'invention ;
[Fig. 2] la figure 2 représente schématiquement des données enregistrées par une passerelle de communication, conformément à un mode de réalisation particulier de l'invention ;
[Fig. 3] la figure 3 représente schématiquement un ensemble de modules mis en œuvre par une première passerelle de communication, conformément à un mode de réalisation particulier de l'invention ;
[Fig. 4] la figure 4 représente schématiquement un ensemble de modules mis en œuvre par une deuxième passerelle de communication, conformément à un mode de réalisation particulier de l'invention ; et
[Fig. 5] la figure 5 représente, sous forme d'un diagramme, les étapes de procédés de communication mis en œuvre par des passerelles de communication, conformément à un mode de réalisation particulier de l'invention ; et
[Fig. 6] la figure 6 représente, sous forme d'un diagramme, les étapes de procédés de communication mis en œuvre par des passerelles de communication, conformément à un mode de réalisation particulier de l'invention.

### Description des modes de réalisation

Comme indiqué ci-avant, l'invention porte sur un transfert de données entre une passerelle de communication et un réseau de communication distant.

Dans ce document, une passerelle de communication (appelé aussi « passerelle », ou encore « gateway » an anglais) désigne un dispositif, tel qu'un modem ou un routeur par exemple, configuré pour faire l'interface entre deux réseaux de communication distincts, de sorte à relier par exemple un réseau local et un réseau de communication distant (Internet par exemple). Une passerelle assure le routage des données échangées entre les deux réseaux en question et peut également mettre en œuvre diverses fonctions associées, tels que des fonctions de pare-feu, de proxy etc.

L'invention se propose de faciliter l'échange d'un flux de données entre une passerelle de communication et un réseau de communication distant, ladite passerelle de communication faisant l'interface entre un réseau local et le réseau de communication distant. Comme déjà indiqué, dans certaines situations, une première passerelle de communication peut ne pas disposer d'une qualité de connexion suffisante avec un réseau de communication distant pour permettre un échange de données dans des conditions satisfaisantes. Un but de l'invention est de pallier une telle déficience de qualité de connexion. Pour ce faire, l'invention propose de permettre à une telle première passerelle de coopérer via une connexion sans fil avec au moins une deuxième passerelle de communication, voisine de ladite première passerelle, de sorte à ce que la ou les deuxièmes passerelles servent de points d'accès pour accéder à un réseau de communication distant (de type Internet par exemple). La première passerelle peut ainsi échanger, via la deuxième passerelle agissant en tant que point d'accès, un flux quelconque de données avec le réseau de communication distant. La ou les deuxièmes passerelles assurent le transit de données entre la première passerelle et le réseau distant afin de permettre un transfert du flux de données dans de bonnes conditions (par exemple avec une bande passante montante et/ou descendante satisfaisante).

L'invention concerne la première passerelle et la ou les deuxièmes passerelles telles qu'exposées ci-dessus et vise en outre les procédés de communication mis en œuvre respectivement par ces passerelles pour permettre un transfert de données entre la première passerelle et le réseau de communication distant.

D'autres aspects et avantages de la présente invention ressortiront des exemples de réalisation décrits ci-dessous en référence aux dessins mentionnés ci-avant.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

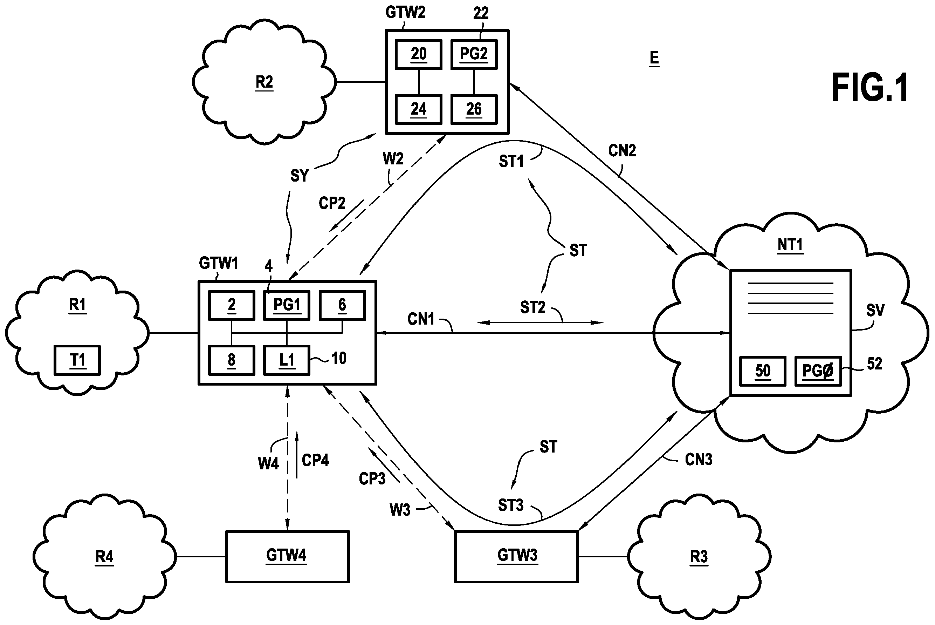

La **figure 1** représente, de manière schématique, un environnement E comportant un ensemble de passerelles de communication GTW1, GTW2, GTW3 et GTW4 conformes à un mode de réalisation de l'invention. Chacune de ces passerelles GTW1-GTW4 est configurée pour faire l'interface entre un réseau local respectif R1, R2, R3 et R4 d'une part, et un réseau de communication distant NT1 d'autre part. Dans cet exemple, les passerelles GTW1-GTW4 sont chacune configurées pour servir de point d'accès, pour leur réseau local respectif R1-R4, au réseau de communication NT1.

La première passerelle GTW1 et la deuxième passerelle GTW2 forment ensemble un système de communication noté SY.

On suppose ici que les passerelles GTW1-GTW4 sont reliées à leur réseau local respectif R1-R4 par une liaison de communication sans fil, de type Wifi par exemple. On comprend que des liaisons de communication filaires ou sans fil, autres que de type Wifi, sont toutefois possibles telles qu'une liaison de type liaison filaire, courants porteurs en ligne, Bluetooth® ou équivalent.

On suppose par ailleurs que le réseau de communication NT1 est un réseau Internet, comportant dans cet exemple un serveur SV configuré pour échanger des données avec les réseaux locaux R1-R4 via leur passerelle GTW1-GTW4 respective. Des réseaux de communication NT1 autres qu'Internet sont toutefois possibles.

Chaque réseau local R1-R4 peut comporter au moins un terminal quelconque agissant en tant que client du point de vue de la passerelle GTW1-GTW4 associée. Le réseau local R1 comporte ici par exemple un terminal T1 (par exemple un ordinateur, un téléphone mobile ou équivalent) configuré pour se connecter à sa passerelle GTW1 par une liaison sans fil de type Wifi afin de communiquer avec le réseau de communication distant NT1, et plus particulièrement avec le serveur distant SV dans cet exemple.

Comme illustré en **figure 1****,** les passerelles GTW1, GTW2 et GTW3 peuvent par exemple établir une liaison de communication notée respectivement CN1, CN2 et CN3 avec le serveur distant SV du réseau de communication NT1. Chacune de ces connexions CN1-CN3 est apte à assurer le transit de données de façon bidirectionnelle (communications montantes et descendantes) entre le serveur distant SV et la passerelle correspondante.

Par ailleurs, dans cet exemple de réalisation, les passerelles de communication GTW1-GTW4 sont configurées pour communiquer entre elles via des connexions (ou liaisons de communication) sans fil. On suppose par exemple ici que la passerelle GTW1 est configurée pour communiquer avec les passerelles GTW2, GTW3 et GTW4 via une connexion sans fil W2, W3 et W4 respectivement. Les connexions sans fil W2-W4 sont dans cet exemple de type Wifi, bien que d'autres types de connexion sans fil soient possibles (par exemple de type Bluetooth® ou équivalent).

L'établissement de ces connexions sans fil W2-W4 est ici possible car les passerelles GT2-GTW4 sont situées dans le voisinage de la passerelle GTW1, c'est-à-dire à portée de communication de la passerelle GTW1. Chaque passerelle GTW1-GTW4 est par exemple positionnée dans un lieu distinct (une maison, une école, un lieu de travail...), ces lieux étant situés à proximité les uns des autres. Comme expliqué par la suite, ces connexions sans fil W2-W4 permettent aux passerelles GTW1-GTW4 de coopérer entre elles pour mettre en œuvre l'invention selon un mode de réalisation particulier.

Les passerelles GTW2, GTW3 et GWT4 peuvent par exemple envoyer des capacités d'accès notées respectivement CP2, CP3 et CP4 à la passerelle GTW1 via les connexions sans fil respectives W2-W4. Les capacités d'accès CP2-CP4 sont des données indicatives de la qualité de la connexion respectives CN2-CN4 que la passerelle correspondante GTW2-GTW4 est apte à établir avec le réseau distant NT1 (et plus particulièrement avec le serveur distant SV dans cet exemple). A partir des capacités d'accès CP2-CP4, la première passerelle GTW1 peut déterminer dans quelles conditions des données peuvent être transférées via les liaisons de communication CN2-CN4.

Les capacités d'accès CP2-CP4 comportent par exemple au moins l'un des paramètres suivants pour caractériser les connexions respectives CN2-CN4 :
- le débit de transfert maximal ;
- le débit de transfert effectif ;
- la latence de transfert ; et
- le type de connexion.

A noter dans ce document qu'un débit de transfert (ou bande passante) peut caractériser un débit «montant» et/ou «descendant». Il peut s'agir d'un débit maximal ou d'un débit effectif à un instant donné.

Dans l'exemple illustré en **figure 1****,** la passerelle GTW1 centralise les capacités d'accès CP2-CP4 émises par les passerelles voisines GTW2-GTW4. On comprend toutefois que chaque autre passerelle GTW2-GTW4 peut agir de façon analogue à la passerelle GTW1, bien que cela ne soit ni illustré ni décrit par souci de simplicité.

La **figure 1** représente en outre schématiquement la structure de la première passerelle GTW1, conformément à un mode de réalisation particulier.

Plus précisément, la passerelle GTW1 comprend dans cet exemple au moins un processeur 2, une mémoire non volatile 4, une première interface de communication 6, une deuxième interface de communication 8 et une mémoire non volatile réinscriptible 10 configurée pour stocker des données L1.

La mémoire 4 est une mémoire non volatile réinscriptible (Flash ou EEPROM par exemple) ou une mémoire morte (ROM), cette mémoire constituant un support d'enregistrement (ou support d'informations) conforme à un mode de réalisation particulier, lisible par la passerelle GTW1, et sur lequel est enregistré un programme d'ordinateur PG1 conforme à un mode de réalisation particulier. Ce programme d'ordinateur PG1 comporte des instructions pour l'exécution des étapes d'un premier procédé de communication selon un mode de réalisation particulier.

La première interface de communication 6 est configurée pour assurer l'interface via une connexion sans fil avec le réseau local R1. Dans cet exemple, la passerelle GTW1 utilise cette première interface de communication 6 pour communiquer via une connexion sans fil de type Wifi avec le terminal T1 du réseau local R1.

La deuxième interface de communication 8 est configurée pour assurer l'interface avec le réseau de communication distant NT1. La passerelle GTW1 utilise ici cette deuxième interface 8 pour communique via une quelconque connexion (filaire par exemple) avec le serveur distant SV du réseau distant NT1.

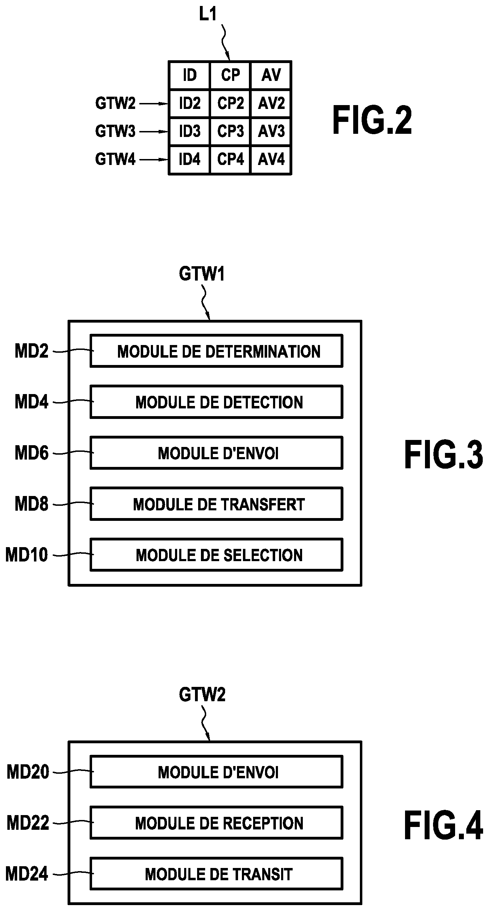

La mémoire non volatile réinscriptible 10 est par exemple de type Flash ou EEPROM. Les données L1 pouvant être contenues dans cette mémoire 10 sont décrites plus en détail en référence à la **figure 2****.** Ces données L1 comportent notamment les capacités d'accès CP2-CP4 susceptibles d'être transmises par les passerelles voisines GTW2-GTW4 via les connexions sans fil respectives W2-W4.

La **figure 1** représente également schématiquement la structure de la deuxième passerelle GTW2, conformément à un mode de réalisation particulier. La passerelle GTW2 présente ici une structure analogue à la structure de la passerelle GTW1 décrite ci-avant.

Plus précisément, la passerelle GTW2 comprend dans cet exemple au moins un processeur 20, une mémoire non volatile 22, une première interface de communication 24 et une deuxième interface de communication 26.

La mémoire 22 est une mémoire non volatile réinscriptible (Flash ou EEPROM par exemple) ou une mémoire morte (ROM), cette mémoire constituant un support d'enregistrement (ou support d'informations) conforme à un mode de réalisation particulier, lisible par la passerelle GTW2, et sur lequel est enregistré un programme d'ordinateur PG2 conforme à un mode de réalisation particulier. Ce programme d'ordinateur PG2 comporte des instructions pour l'exécution des étapes d'un deuxième procédé de communication selon un mode de réalisation particulier.

La première interface de communication 24 est configurée pour assurer l'interface via une connexion sans fil avec le réseau local R2. Dans cet exemple, la passerelle GTW2 peut utiliser cette première interface de communication 24 pour communiquer via une connexion sans fil de type Wifi avec un terminal quelconque (non représenté) du réseau local R2.

La deuxième interface de communication 26 est configurée pour assurer l'interface avec le réseau de communication distant NT1. La passerelle GTW2 utilise ici cette deuxième interface 26 pour communiquer via une quelconque connexion (filaire par exemple) avec le serveur distant SV du réseau distant NT1.

Les autres passerelles GTW3 et GTW4 présentant une structure analogue à celle de la passerelle GTW2, elles ne seront pas décrites plus détail par souci de simplicité.

La **figure 1** représente également schématiquement la structure du serveur distant SV, conformément à un mode de réalisation particulier. Dans cet exemple, le serveur distant SV est situé dans le réseau de communication NT1 et présente la structure d'un ordinateur. Plus précisément, le serveur SV comporte notamment dans cet exemple un processeur 50, ainsi qu'une mémoire non volatile 52 dans laquelle est enregistré un programme d'ordinateur PG0 conforme à un mode de réalisation particulier.

On comprend ici que certains éléments généralement présents dans une passerelle de communication et dans un serveur ont été volontairement omis car ils ne sont pas nécessaires à la compréhension de la présente invention.

On comprendra par ailleurs que les passerelles GTW1-GTW4 et le serveur SV représentés en **figure 1** ne constituent qu'un exemple de réalisation particulier, d'autres mises en œuvre étant possibles dans le cadre de l'invention. L'homme du métier comprend en particulier que certains éléments des passerelles GTW1 et GTW2 ne sont décrits ici que pour faciliter la compréhension de l'invention, ces éléments n'étant pas nécessaires pour mettre en œuvre l'invention.

La **figure 2** représente schématiquement les données L1 susceptibles d'être stockées dans la mémoire non volatile réinscriptible 10 de la passerelle GTW1. Ces données L1 se présentent ici sous la forme d'une table ou d'une liste, bien que d'autres représentations soient possibles selon le cas d'espèce.

Plus précisément, les données L1 comportent les capacités d'accès CP2, CP3 et CP4 en association avec un identifiant ID2, ID3 et ID4 des passerelles respectives GTW2, GTW3 et GTW4. Comme déjà indiqué, ces capacités d'accès CP2-CP4 caractérisent la qualité de la connexion ou liaison CN2-CN4 que les passerelles GTW2-GTW4 sont aptes à établir avec le serveur distant SV (à l'instant courant et/ou à dans le futur). On suppose ici que ces capacités d'accès CP2-CP4 comprennent par exemple une valeur de la bande passante de la connexion correspondante CN2-CN4. Il peut s'agir de la bande passante en émission et/ou en réception du point de vue de la passerelle. Les capacités d'accès CP2-CP4 stockées dans la mémoire 10 renseignent donc la première passerelle GTW1 sur la capacité des passerelles voisines GTW2-GTW4 à échanger des données avec le réseau de communication distant NT1.

Par ailleurs, dans un mode de réalisation particulier décrit ci-après, les données L1 peuvent en outre comprendre, en association avec chacune des passerelles de communication GTW2-GTW4, un état de disponibilité respectif AV2-AV4 (notés collectivement AV) indicatif de la probabilité que ladite passerelle concernée soit disponible pour assurer le transit de données entre le réseau de communication NT1 et une passerelle voisine (en particulier GTW1 dans les exemples de réalisation qui suivent). Un état de disponibilité AV peut par exemple définir une probabilité que la passerelle concernée va être utilisée à un point ultérieur dans le temps. Plus généralement, un état de disponibilité AV peut être une valeur indiquant un degré d'occupation ou un degré d'utilisation des ressources de la passerelle concernée. Cet état de disponibilité AV peut être déterminé par chaque passerelle GTW2-GTW4 puis transmis à la première passerelle GTW1 via la connexion sans fil correspondante W2-W4. A partir des états de disponibilité AV2-AV4, la première passerelle GTW1 peut alors évaluer quelle(s) passerelle(s) voisine(s) est/sont susceptible(s) de prendre en charge le transit d'au moins une partie d'un flux de données ST à échanger avec le serveur distant SV.

Comme représenté en **figure 3** dans un mode de réalisation particulier, le processeur 2 de la première passerelle GTW1 piloté par le programme d'ordinateur PG1 met ici en œuvre un certain nombre de modules, à savoir : un module de détermination MD2, un module de détection MD4, un module d'envoi MD6, un module de transfert MD8 et un module de sélection MD10.

Le module de détermination MD2 est configuré pour déterminer un niveau de qualité de connexion requis (noté par la suite QT) pour réaliser un transfert d'un flux de données avec le réseau de communication NT1. Ce niveau requis QT de la qualité de connexion est par exemple défini par au moins l'un des paramètres de connexion suivants :
- un débit de transfert maximal ;
- un débit de transfert effectif ;
- une latence de transfert ; et
- un type de connexion.

Le flux de données que l'on vise ici à transférer entre la première passerelle GTW1 et le serveur distant SV est de type quelconque et peut comporter tous types de données, tels que des données multimédias par exemple.

Le module de détection MD4 est configuré pour détecter qu'une première connexion CN1, satisfaisant ledit niveau de qualité de connexion requis, ne peut être établie entre la première passerelle GTW1 agissant en tant que point d'accès au réseau local R1 et le réseau de communication NT1. Le niveau de qualité de connexion requis n'est par exemple pas atteint car aucune connexion CN1 ne peut être établie entre la première passerelle GTW1 et le serveur distant SV ou car une telle connexion peut être établie mais avec une qualité de connexion insuffisante (par exemple en raison d'une bande passante montante et/ou descendante trop faible).

En réponse à la détection qu'aucune première connexion CN1 satisfaisant ledit niveau de qualité de connexion requis ne peut être établie entre la première passerelle GTW1 agissant en tant que point d'accès au réseau local R1 et le réseau de communication NT1, le module d'envoi MD6 est configuré pour envoyer une requête d'accès à la deuxième passerelle de communication GTW2. Cette requête d'accès vise à établir une deuxième connexion sans fil W2 entre la première passerelle de communication GTW1 agissant en tant que client et la deuxième passerelle de communication GTW2 agissant en tant que point d'accès au réseau de communication NT1.

Le module de transfert MD8 est configuré pour réaliser un transfert via ladite deuxième connexion sans fil W2, le transfert comportant la réception et/ou l'envoi d'au moins une première partie ST1 d'un flux de données ST depuis et/ou vers le réseau de communication NT1.

Comme expliqué par la suite, la première passerelle GTW1 est ainsi capable d'utiliser une autre passerelle (à savoir GTW2 dans cet exemple) pour faire transiter au moins une partie ST1 d'un flux de données ST entre la première passerelle GTW1 et le serveur distant SV. L'utilisation d'une passerelle tierce permet de faciliter l'échange de données entre la première passerelle GTW1 et le réseau de communication distant NT1.

Comme représenté en **figure 4** dans un mode de réalisation particulier, le processeur 20 de la deuxième passerelle GTW2 piloté par le programme d'ordinateur PG2 met ici en œuvre un certain nombre de modules, à savoir : un module d'envoi MD20, un module de réception MD22 et un module MD24 de transit de données.

Le module d'envoi MD20 est configuré pour envoyer, à la première passerelle GTW1, les capacités d'accès CP1 de la deuxième passerelle GTW2 au réseau de communication NT1.

Le module de réception MD22 est configuré pour recevoir, en provenance de la première passerelle GTW1, une requête d'accès pour établir une connexion sans fil entre la deuxième passerelle GTW2 agissant en tant que point d'accès au réseau de communication NT1 et la première passerelle GTW1 agissant en tant que client.

Le module de transit MD24 est configuré pour réaliser un transit, via la connexion sans fil W2 et la connexion CN2, d'un flux de données ST1 entre la première passerelle de communication GTW1 et le réseau de communication NT1. Ce flux de données ST1 peut constituer la totalité ou une partie seulement du flux de données ST total que la première passerelle GTW1 échange avec le serveur distant SV. Comme illustré en **figure 1****,** une autre partie ST2 du flux de données peut le cas échéant transiter par la connexion CN1 entre la passerelle GTW1 et le serveur SV. De même, comme illustré en **figure 1****,** encore une autre partie ST3 du flux de données ST total peut transiter via une connexion sans fil W3 établie entre la première passerelle GTW1 et la passerelle voisine GTW3, comme décrit plus en détail ultérieurement.

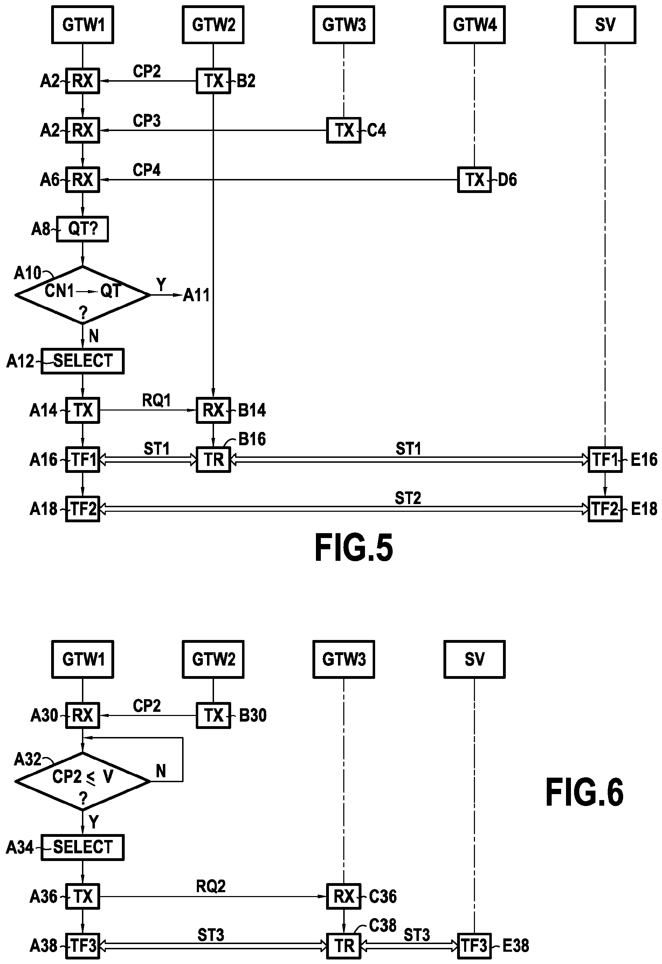

La configuration et le fonctionnement des modules MD2-MD10 de la première passerelle GTW1 et des modules MD20-MD24 de la deuxième passerelle GTW2 apparaîtront plus précisément dans les exemples de réalisation décrits ci-après en référence aux **figures 5** et **6****.** On comprend que les modules MD2-MD10 et MD20-MD24 tels que décrits ci-dessus ne constituent qu'un exemple de mise en œuvre non limitatif de l'invention.

Un mode de réalisation particulier est à présent décrit en référence à la **figure 5****.** Plus précisément, la première passerelle GTW1 met en œuvre un premier procédé de communication selon un mode de réalisation particulier, en exécutant le programme PG1. De même, la deuxième passerelle GTW2 met en œuvre un deuxième procédé de communication selon un mode de réalisation particulier, en exécutant le programme PG2.

Comme illustré en **figure 1****,** on suppose ici que le terminal T1 du réseau local R1 est configuré pour échanger un flux de données ST avec le serveur distant SV du réseau de communication NT1. Pour ce faire, le terminal T1 utilise sa passerelle GTW1 pour communiquer avec le serveur distant SV.

Au cours d'étapes d'envoi B2, C4 et D6, les passerelles de communication GTW2, GTW3 et GTW4, situées dans le voisinage de la première passerelle GTW1, envoient leurs capacités d'accès respectives CP2, CP3 et CP4 au réseau de communication NT1. Ces envois peuvent par exemple être effectués périodiquement par les passerelles GTW2-GTW4, ou ponctuellement sur requête de la première passerelle GTW1. Dans cet exemple, ces capacités d'accès CP2-CP4 caractérisent la capacité de ces passerelles GTW2-GTW4 à communiquer avec le serveur distant SV, et comportent pour ce faire par exemple l'un au moins des paramètres suivants :
- un débit de transfert maximal ;
- un débit de transfert effectif ;
- une latence de transfert ; et
- un type de connexion.

Ces paramètres peuvent caractériser par exemple la bande passante disponible (communications montantes et/ou descendantes) d'une connexion entre la passerelle concernée et le serveur distant SV.

Comme illustré en **figure 5****,** la première passerelle GTW1 reçoit les capacités d'accès CP2, CP3 et CP4 au cours d'étapes de réception A2, A4 et A6 respectivement. Dans cet exemple, la passerelle GTW1 enregistre ensuite ces capacités d'accès CP2-CP4 en tant que données L1 dans sa mémoire 10 comme illustré dans la **figure 2****.** Dans un exemple particulier, la première passerelle GTW1 reçoit également les états de disponibilité AV des passerelles voisines GTW2-GTW4 et enregistre ces états de disponibilité AV en tant que données L1 comme décrit précédemment en référence à la **figure 2****.** Des mises en œuvre de l'invention sans de tels états de disponibilité AV sont toutefois possibles.

La première passerelle GTW1 détermine (A8) par ailleurs un niveau de qualité de connexion requis, noté QT, pour réaliser un transfert d'un flux de données ST avec le réseau de communication NT1. Ce transfert peut s'effectuer depuis la passerelle GTW1 vers le serveur distant SV (communication montante) et/ou depuis le serveur distant SV vers la passerelle GTW1 (communication descendante). Ce niveau de qualité de connexion requis QT peut être défini par un utilisateur ou être évalué par la première passerelle GTW1 d'une quelconque façon appropriée, en prenant par exemple en compte un type de données à échanger avec le réseau distant NT1, le volume desdites données à échanger, un type de service à mettre en œuvre et/ou un degré de priorité associé.

On suppose ici par exemple que la première passerelle GTW1 détermine en A8 un niveau QT de bande-passante (ou débit de transfert) minimum requis pour effectuer le transfert du flux de données ST concerné.

L'étape A8 de détermination peut être réalisée indifféremment avant ou après l'une au moins des étapes de réception A2-A6. De plus, le niveau de qualité de connexion requis QT tel que déterminé en A8 peut porter sur un ou une pluralité de paramètres de connexion.

Au cours d'une étape de vérification A10, la première passerelle GTW1 détermine si une connexion CN1, satisfaisant ledit niveau de qualité de connexion requis QT, peut être établie entre la première passerelle GTW1, agissant en tant que point d'accès au réseau local R1, et le réseau de communication NT1.

Si la passerelle GTW1 détecte en A10 qu'une telle qualité de connexion n'est pas disponible sur la liaison de communication CN1 (i.e. la qualité de connexion disponible est inférieur au niveau QT requis), le procédé se poursuit à l'étape A12. Dans le cas contraire, le procédé prend fin (A11). La passerelle GTW1 détecte (A10) par exemple que le niveau de qualité de connexion requis QT ne peut être atteint dans le cas où aucune connexion CN1 ne peut être établie entre la passerelle GTW1 et le serveur distant SV (cas où la connexion a été coupée par exemple), ou encore lorsqu'une connexion CN1 peut être établie mais avec une qualité de connexion insuffisante pour satisfaire le niveau de qualité de connexion requis QT tel qu'identifié en A8.

Lors d'une étape A12 de sélection, la première passerelle GTW1 sélectionne, parmi les passerelles voisines GTW2-GTW4, une passerelle avec laquelle elle va coopérer comme expliqué ci-après. Cette sélection A12 est par exemple réalisée à partir des capacités d'accès CP2-CP4 enregistrées en tant que données L1 dans la mémoire 10 et éventuellement en fonction du niveau de qualité de connexion requis QT tel qu'identifié à l'étape A8. Dans un exemple particulier, la première passerelle GTW1 prend également en compte les états de disponibilité AV2-AV4 contenues dans les données L1 pour réaliser la sélection A12.

Selon d'autres exemples de réalisation, aucune sélection A12 n'est nécessaire en tant que telle, par exemple si une seule autre passerelle voisine est paramétrée au niveau de la première passerelle GTW1 comme pouvant agir en tant que point d'accès au réseau distant NT1.

La manière dont la première passerelle GTW1 choisit une passerelle voisine en A12 peut varier selon le cas. On suppose ici que la première passerelle GTW1 sélectionne en A12, parmi les passerelles prédéfinies GTW2-GTW4, la deuxième passerelle GTW2 qui dispose d'une qualité de connexion avec le réseau distant NT1 qui satisfait un critère prédéfini. Cette qualité de connexion permet par exemple de faire transiter la totalité du flux de données ST ou, alternativement, de faire transiter au moins un pourcentage prédéfini de ce flux de données total ST. Dans un exemple particulier, la première passerelle GTW1 sélectionne en A12 celle parmi les passerelles prédéfinies GTW2-GTW4 dont la capacité d'accès CP est la plus importante.

Au cours d'une étape A14 d'envoi, la première passerelle GTW1 envoie une requête d'accès RQ1 à la deuxième passerelle GTW2 sélectionnée en A12. Cette requête RQ1 vise à établir une connexion sans fil W2 (de type Wifi dans cet exemple) entre la première passerelle GTW1 agissant en tant que client et la deuxième passerelle GTW2 agissant en tant que point d'accès au réseau de communication NT1 **(****figure 1**). Autrement dit, la première passerelle GTW1 demande, au moyen de la requête d'accès RQ1, à la deuxième passerelle GTW2 d'agir à son égard en tant qu'un point d'accès du réseau distant NT1. La deuxième passerelle GTW2 reçoit la requête RQ1 lors d'une étape B14 de réception.

En réponse à requête d'accès RQ1, la deuxième passerelle GTW2 agit en tant que point d'accès au réseau de communication NT1 pour la première passerelle GTW1. Plus précisément, au cours d'une étape A16 de transfert, la première passerelle GTW1 transfert via la connexion sans fil W2 un flux de données ST1, ce transfert (noté TF1) comprenant la réception et/ou l'envoi de données depuis et/ou vers le réseau de communication NT1. Le flux de données ST1 ainsi échangé entre la première passerelle GTW1 et le serveur distant SV via la deuxième passerelle GTW2 peut constituer le flux de données total ST ou une partie seulement de ce flux.

Comme illustré en **figure 1****,** la deuxième passerelle GTW2 fait ainsi transiter (B16), via la connexion sans fil W2 et la connexion CN2, le flux de données ST1 entre la première passerelle GTW1 et le réseau de communication NT1. Le serveur distant SV reçoit et/ou envoie les données du flux ST1 lors d'une étape E18 de transfert, comme illustré en **figure 5****.**

Selon un exemple particulier, la première passerelle GTW1 établit (A18) également une connexion CN1 directement avec le serveur distant SV, c'est-à-dire sans passer par une autre passerelle GTW2-GTW4 fonctionnant en tant que point d'accès. Cette connexion CN1 ne satisfait toutefois pas le niveau de qualité de connexion requis QT, conformément à ce qui a été précédemment détecté lors de l'étape de vérification A10. Dans ce cas, la première passerelle GTW1 peut transférer, via cette connexion CN1, une partie seulement, notée ST2, du flux total ST de données, ce transfert (noté TF2) comportant la réception et/ou l'envoi de données (autres que celles de la partie ST1 du flux) depuis et/ou vers le réseau de communication NT1. Dans cette configuration, la première passerelle GTW1 peut ainsi échanger simultanément des données avec le réseau distant NT1 via deux canaux de communication distincts, à savoir via la connexion CN1 d'une part, et via la liaison comportant la connexion sans fil W2 et la connexion CN2 d'autre part.

Selon un exemple de réalisation particulier, la première passerelle GTW1 sélectionne lors de l'étape de sélection A12 une pluralité de passerelles parmi les passerelles GTW2-GTW3. Dans ce cas, la première passerelle GTW1 envoie en A14 une requête d'accès RQ1 à chacune des passerelles sélectionnées en A12 afin que ces dernières agissent chacune en tant que point d'accès de la première passerelle GTW1. La première passerelle GTW1 peut ainsi échanger simultanément des données avec le réseau distant NT1 via différentes passerelles tierces fonctionnant en tant que point d'accès au réseau de communication NT1.

L'invention permet de faciliter l'échange d'un flux de données entre une première passerelle de communication et un réseau de communication distant. Dans un cas où une passerelle dispose d'une mauvaise connexion avec le réseau de communication distant, elle peut faire appel à au moins une autre passerelle avec laquelle elle peut communiquer via une connexion sans fil pour faire transiter des données qu'elle échange avec le réseau de communication distant. La première passerelle fonctionne alors en tant que client vis-à-vis de l'autre passerelle qui agit en tant que point d'accès au réseau de communication distant, comme expliqué ci-avant.

Grâce à l'invention, une passerelle peut jouer son rôle traditionnel de point d'accès pour un réseau local et aussi devenir un client, de type Wifi par exemple, vis-à-vis d'une autre passerelle.

De cette manière, les temps de transfert peuvent être réduits et la qualité du transfert peut être optimisée. L'invention peut permettre par exemple de doubler la bande passante (montante et descendante) de l'accès d'une passerelle à un réseau de communication.

Par ailleurs, lorsqu'une passerelle perd son accès direct à un réseau de communication, elle peut palier à ce problème en utilisant une passerelle tierce comme point d'accès, ce qui permet de sécuriser l'accès audit réseau. Une telle sécurisation est notamment avantageuse pour la mise en œuvre de services d'importance critique (services d'urgence, de santé, de sécurité...).

La présente invention permet ainsi d'améliorer de manière significative l'accès d'une passerelle de communication à un réseau distant, sans que cela nécessite la mise en œuvre de nouvelles infrastructures. On peut avantageusement tirer profit d'un réseau existant de passerelles de communication connectées entre elles via des liaisons sans fil dans un espace donné pour améliorer l'accès de chaque passerelle à un réseau distant.

Une passerelle peut ainsi vérifier périodiquement les capacités d'accès des autres passerelles situées dans son voisinage afin d'adapter les canaux de communication utilisés pour transférer des données en fonction des besoins en termes de qualité de connexion avec le réseau de communication distant.

De façon avantageuse, une passerelle peut sélectionner plusieurs passerelles situées dans son voisinage afin d'améliorer encore d'avantage sa qualité de connexion à un réseau de communication distant.

Un mode de réalisation particulier est à présent décrit en référence à la **figure 6****.** Plus précisément, on suppose que la première passerelle GTW1 et le serveur distant SV échangent un flux de données ST1 par l'intermédiaire de la deuxième passerelle GTW2 (étapes A16, B16 et E16), comme précédemment décrit en référence à la **figure 5****.**

Comme illustré en **figure 6****,** la première passerelle GTW1 reçoit (A30) ponctuellement ou périodiquement des capacités d'accès CP2 mises à jour de la deuxième passerelle GTW2, tandis que le transfert (A16, B16, E16) du flux de données ST1 est en cours via la deuxième passerelle GTW2. La première passerelle GTW1 peut ainsi vérifier, de préférence en temps-réel, la qualité de la connexion CN2 dont dispose la deuxième passerelle GTW2 avec le réseau de communication distant NT1, à partir des capacités d'accès CP2 envoyées (B30) par la deuxième passerelle GTW2.

Au cours d'une étape de vérification A32, si la première passerelle GTW1 détecte que les capacités d'accès CP2 de la deuxième passerelle GTW2 ne satisfont plus un niveau seuil prédéterminé, le procédé se poursuit en A34. La première passerelle GTW1 peut ainsi détecté lorsque la deuxième passerelle GTW2 n'offre plus un accès de qualité suffisante au réseau distant NT1 pour réaliser un transfert de données avec le serveur distant SV.

Au cours d'une étape de sélection A34, la première passerelle GTW1 sélectionne alors une passerelle voisine autre que la deuxième passerelle GTW2, à savoir la troisième passerelle GTW3 dans cet exemple, comme illustré en **figures 1** et 6. Cette sélection A34 peut être réalisée de façon analogue à la sélection A12 décrite ci-avant en référence à la **figure 5****.**

La première passerelle GTW1 envoie (A36) ensuite une requête d'accès RQ2 à la troisième passerelle GTW3 pour établir une nouvelle connexion sans fil W3 (ici de type Wifi) entre la première passerelle GTW1 agissant en tant que client et la troisième passerelle GTW3 agissant en tant que point d'accès au réseau de communication NT1. La passerelle GTW3 reçoit cette requête RQ2 en C36.

La première passerelle GTW1 bascule (A38) le transfert de tout ou partie du flux de données ST1, précédemment transféré via la deuxième passerelle GTW2, sur la troisième connexion sans fil W3, de sorte que la troisième passerelle GTW3 agisse en tant que point d'accès au réseau de communication NT1 pour la première passerelle GTW1.

Plus précisément, au cours d'une étape A38 de transfert, la première passerelle GTW1 transfert via la connexion sans fil W3 un flux de données noté ici ST3, ce transfert (noté TF3) comprenant la réception et/ou l'envoi de données depuis et/ou vers le réseau de communication NT1. Le flux de données ST3 ainsi échangé entre la première passerelle GTW1 et le serveur distant SV via la troisième passerelle GTW3 peut constituer le flux de données total ST ou une partie seulement de ce dernier.

Comme illustré en **figure 1****,** la troisième passerelle GTW3 fait ainsi transiter (C38), via la connexion sans fil W3 et la connexion CN3, le flux de données ST3 entre la première passerelle GTW1 et le réseau de communication NT1. Le serveur distant SV reçoit ou envoie les données du flux ST3 lors d'une étape E38 de transfert, comme illustré en **figure 6****.**

Selon un exemple particulier, la première passerelle GTW1 transfère également, via sa connexion directe CN1, une partie ST2 du flux total ST de données, ce transfert comportant la réception et/ou l'envoi de données autres que celles de la partie ST3 (et éventuellement ST2) du flux de données total ST.

De cette manière, la première passerelle GTW1 adapte la manière dont elle échange des données avec le réseau de communication distant NT1 en fonction de la qualité de connexion offerte par une passerelle tierce fonctionnant en tant que point d'accès du réseau de communication lors d'un transfert en cours.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

## Revendications

1. Procédé de communication mis en œuvre par une première passerelle de communication (GTW1) faisant l'interface entre un réseau local (R1) et un réseau de communication (NT1), comprenant les étapes suivantes :
- détermination d'un niveau de qualité de connexion requis pour réaliser un transfert d'un flux de données avec le réseau de communication (NT1) ;
- détection qu'une première connexion, satisfaisant ledit niveau de qualité de connexion requis, ne peut être établie entre la première passerelle agissant en tant que point d'accès du réseau local (R1) et le réseau de communication (NT1) ;
- en réponse à ladite détection, envoi d'une requête d'accès à une deuxième passerelle de communication (GTW2), faisant l'interface entre un deuxième réseau local (R2) et le réseau de communication (NT1), pour établir une deuxième connexion sans fil entre la première passerelle de communication (GTW1) agissant en tant que client et la deuxième passerelle de communication (GTW2) agissant en tant que point d'accès au réseau de communication (NT1) ; et
- transfert via ladite deuxième connexion sans fil, comportant la réception et/ou l'envoi d'au moins une première partie dudit flux de données depuis et/ou vers le réseau de communication (NT1).

2. Procédé selon la revendication 1, dans lequel le niveau de la qualité de connexion requis est défini par au moins l'un des paramètres de connexion suivants :
- un débit de transfert maximal ;
- un débit de transfert effectif ;
- une latence de transfert ; et
- un type de connexion.

3. Procédé selon la revendication 1 ou 2, comprenant les étapes suivantes :
- établissement d'une première connexion, ne satisfaisant pas ledit niveau de qualité de connexion requis, entre la première passerelle de communication (GTW1) agissant en tant que point d'accès du réseau local (R1) et le réseau de communication (NT1) ; et
- transfert, via ladite première connexion, comportant la réception et/ou l'envoi d'au moins une deuxième partie dudit flux de données, autre que ladite première partie, depuis et/ou vers le réseau de communication (NT1).

4. Procédé selon l'une quelconque des revendications 1 à 3, dans lequel lors de l'étape de détection, la première passerelle de communication (GTW1) détecte qu'aucune première connexion entre la première passerelle agissant en tant que point d'accès du réseau local (R1) et le réseau de communication (NT1) ne peut être établie.

5. Procédé selon l'une quelconque des revendications 1 à 4, dans lequel :
- lors de l'étape d'envoi, la première passerelle de communication (GTW1) envoie une dite requête d'accès à une pluralité de deuxièmes passerelles de communication (GTW2, GTW3) pour établir une deuxième connexion entre la première passerelle de communication (GTW1) agissant en tant que client et chaque deuxième passerelle de communication (GTW2, GTW3) agissant en tant que point d'accès au réseau de communication (NT1) ; et
- lors de ladite étape de transfert, ladite au moins une première partie du flux de données est reçue et/ou envoyée via les deuxièmes connexions sans fil établies avec la pluralité de deuxièmes passerelles de communication (GTW2, GTW3).

6. Procédé selon l'une quelconque des revendications 1 à 5, comprenant les étapes suivantes :
- obtention des capacités d'accès (CP1-CP4) au réseau de communication (NT1) d'au moins une passerelle de communication prédéterminée (GTW2-GTW4) ; et
- sélection, en fonction des capacités d'accès et dudit niveau de qualité de connexion requis, de ladite deuxième passerelle de communication (GTW2) parmi ladite au moins une passerelle de communication prédéterminée (GTW2-GTW4).

7. Procédé selon la revendication 6, dans lequel la première passerelle de communication (GTW1) obtient un état de disponibilité de ladite au moins une passerelle de communication prédéterminée (GTW2-GTW4), l'état de disponibilité étant indicatif de la probabilité que ladite passerelle de communication soit disponible pour assurer le transit de ladite au moins une première partie du flux de données entre la première passerelle de communication (GTW1) et le réseau de communication (NT1).

8. Procédé selon la revendication 6 ou 7, comprenant les étapes suivantes :
- vérification des capacités d'accès de la deuxième passerelle de communication (GTW2) tandis que le transfert de ladite au moins une première partie du flux de données est en cours via la deuxième connexion sans fil ; et
- sur détection que les capacités d'accès de la deuxième passerelle de communication (GTW2) ne satisfont plus un niveau seuil prédéterminé :
∘ envoi d'une requête d'accès à une troisième passerelle de communication (GTW3), autre que ladite deuxième passerelle de communication (GTW2), pour établir une troisième connexion sans fil entre la première passerelle de communication (GTW1) agissant en tant que client et la troisième passerelle de communication (GTW3) agissant en tant que point d'accès au réseau de communication (NT1) ; et
∘ basculement du transfert de tout ou partie de ladite au moins une première partie du flux de données avec le réseau de communication (R1) sur la troisième connexion sans fil.

9. Procédé selon la revendication selon l'une quelconque des revendications 1 à 8, dans lequel la deuxième connexion sans fil, et le cas échéant la troisième connexion sans fil, sont de type Wifi.

10. Procédé de communication mis en œuvre par une première passerelle de communication (GTW2) faisant l'interface entre un réseau local (R2) et un réseau de communication (NT1), comprenant les étapes suivantes :
- envoi, à une deuxième passerelle de communication (GTW1) faisant l'interface entre un deuxième réseau local (R1) et le réseau de communication (NT1), des capacités d'accès (CP1-CP4) de ladite première passerelle de communication (GTW2) à un réseau de communication (NT1) ;
- réception, provenant de la deuxième passerelle de communication (GTW1), d'une requête d'accès pour établir une connexion sans fil entre la première passerelle de communication (GTW2) agissant en tant que point d'accès au réseau de communication (NT1) et la deuxième passerelle de communication (GTW1) agissant en tant que client ; et
- transit via ladite connexion sans fil d'un flux de données entre la deuxième passerelle de communication (GTW1) et le réseau de communication (NT1).

11. Procédé selon la revendication 10, comprenant une étape d'envoi d'un état de disponibilité de la première passerelle de communication (GTW2), l'état de disponibilité étant indicatif de la probabilité que ladite première passerelle de communication soit disponible pour assurer ledit transit du flux de données.

12. Procédé selon la revendication 10 ou 11, dans lequel la connexion sans fil est de type Wifi.

13. Programme d'ordinateur (PG1 ; PG2) comportant des instructions pour l'exécution des étapes d'un procédé selon l'une quelconque des revendications 1 à 12 lorsque ledit programme est exécuté par un ordinateur.

14. Première passerelle de communication (GTW1) faisant l'interface entre un réseau local (R1) et un réseau de communication (NT1), comprenant :
- un module de détermination (MD2) configuré pour déterminer un niveau de qualité de connexion requis pour réaliser un transfert d'un flux de données avec le réseau de communication (NT1) ;
- un module de détection (MD4) configuré pour détecter qu'une première connexion, satisfaisant ledit niveau de qualité de connexion requis, ne peut être établie entre la première passerelle agissant en tant que point d'accès du réseau local (R1) et le réseau de communication (NT1) ;
- un module d'envoi (MD6) configuré, en réponse à ladite détection, pour envoyer une requête d'accès à une deuxième passerelle de communication (GTW2), faisant l'interface entre un deuxième réseau local (R2) et le réseau de communication (NT1), pour établir une deuxième connexion sans fil entre la première passerelle de communication (GTW1) agissant en tant que client et la deuxième passerelle de communication (GTW2) agissant en tant que point d'accès au réseau de communication (NT1) ; et
- un module de transfert (MD8) configuré pour réaliser un transfert via ladite deuxième connexion sans fil, le transfert comportant la réception et/ou l'envoi d'au moins une première partie dudit flux de données depuis et/ou vers le réseau de communication (NT1).

15. Première passerelle de communication (GTW2) faisant l'interface entre un réseau local (R3) et un réseau de communication (NT1), comprenant :
- un module d'envoi (MD20) configuré pour envoyer, à une deuxième passerelle de communication (GTW1) faisant l'interface entre un deuxième réseau local (R1) et le réseau de communication (NT1), des capacités d'accès (CP1) de ladite première passerelle de communication (GTW2) à réseau de communication (NT1) ;
- un module de réception (MD22) configuré pour recevoir, en provenance de la deuxième passerelle de communication (GTW1), une requête d'accès pour établir une connexion sans fil entre la première passerelle de communication (GTW2) agissant en tant que point d'accès au réseau de communication (NT1) et la deuxième passerelle de communication (GTW1) agissant en tant que client ; et
- un module de transit (MD24) configuré pour réaliser un transit via ladite connexion sans fil d'un flux de données entre la deuxième passerelle de communication (GTW1) et le réseau de communication (NT1).
